# EUROPÄISCHE PATENTSCHRIFT

(11) **EP 3 140 435 B1**
(45) Veröffentlichungstag und Bekanntmachung des Hinweises auf die Patenterteilung: **24.10.2018**
(21) Anmeldenummer: 15732677.8
(22) Anmeldetag: 29.06.2015
(51) Int. Cl.: C25B 15/08, C25B 1/12, C25B 9/00, C25B 15/02

(54) **VERFAHREN ZUM BETREIBEN EINER ELEKTROLYSEANLAGE SOWIE ELEKTROLYSEANLAGE**
METHOD FOR OPERATING AN ELECTROLYTIC SYSTEM AND ELECTROLYTIC SYSTEM
PROCÉDÉ D'ACTIONNEMENT D'UNE INSTALLATION D'ÉLECTROLYSE ET INSTALLATION D'ÉLECTROLYSE

(30) Priorität: 01.07.2014 DE 102014212718
(43) Veröffentlichungstag der Anmeldung: 15.03.2017
(73) Patentinhaber: Siemens Aktiengesellschaft, 80333 München (DE)
(72) Erfinder: HEROLD, Jochen, 96260 Weismain (DE); KAUTZ, Martin, 91056 Erlangen (DE)
(86) Internationale Anmeldenummer: PCT/EP2015/064722
(87) Internationale Veröffentlichungsnummer: WO 2016/001155

(56) Entgegenhaltungen:
- US-A- 4 107 277
- US-A- 4 530 744
- US-A1- 2006 065 214
- US-A1- 2010 025 232

## Beschreibung

Die Erfindung betrifft ein Verfahren zum Betreiben einer Elektrolyseanlage, insbesondere einer Hochdruckelektrolyseanlage, umfassend einen Elektrolyseur zur Erzeugung von Wasserstoff und Sauerstoff als Produktgase, wobei die im Elektrolyseprozess erzeugten Wasserstoff und Sauerstoff aus dem Elektrolyseur abgeführt werden.

Die Erfindung betrifft weiterhin eine Elektrolyseanlage, insbesondere eine Hochdruckelektrolyseanlage, umfassend einen Elektrolyseur zur Erzeugung von Wasserstoff und Sauerstoff als Produktgase, umfassend weiterhin eine Wasserstoffleitung zum Abführen des im Elektrolyseprozess erzeugten Wasserstoffs sowie eine Sauerstoffleitung zum Abführen des im Elektrolyseprozess erzeugten Sauerstoffs.

Wasserstoff wird heutzutage beispielsweise mittels PEM-Elektrolyse erzeugt. Bestandteil eines PEM-Elektrolyseurs ist eine protonendurchlässige Polymermembran (Proton-Exchange-Membrane), die auf beiden Seiten von porösen Platinelektroden (Anode und Kathode) kontaktiert wird. An diese wird eine äußere Spannung angelegt und auf der Anodenseite des Elektrolyseurs wird Wasser zugeführt. Durch die katalytische Wirkung des Platins wird das Wasser an der Anodenseite zersetzt. Es entstehen dabei Sauerstoff, freie Elektronen und positiv geladene Wasserstoffionen H⁺. Die Wasserstoffionen H⁺ diffundieren durch die protonenleitende Membran auf die Kathodenseite, wo sie mit den Elektronen aus dem äußeren Stromkreis zu Wasserstoffmolekülen H₂ kombinieren.

Die Zerlegung von Wasser zu Wasserstoff und Sauerstoff mittels Elektrolyse eröffnet die Möglichkeit überschüssigen Strom in Form von Wasserstoff oder Sauerstoff zu speichern. Die eingebrachte elektrische Energie findet sich nach der Umsetzung zum größten Teil in der chemischen Energie der Produkte Wasserstoff und Sauerstoff wieder. Jedoch entstehen im Elektrolyseprozess neben den Produkten Wasserstoff und Sauerstoff auch Verluste, die in Form von Reaktionswärme anfallen. In diesem Zusammenhang gilt es zu beachten, dass während der Elektrolyse erhebliche Mengen an elektrischer Energie in Wärmeenergie bzw. Abwärme umgewandelt werden, die zurzeit größtenteils ungenutzt abgeführt werden. Dies liegt vor allem daran, dass das Abwärmeangebot stark schwankend und auf relativ niedrigem Temperaturniveau von ca. 30°C bis 80°C vorliegt.

Aus der DE 10 2005 011 316 A1 ist es beispielsweise bekannt, die Wärme der im Elektrolyseur erzeugten Wasserstoff- und Sauerstoffströme zum Vorwärmen an das für die Elektrolyse benötigte Wasser abzugeben.

Die US 4,107,277 A beschreibt ein Verfahren für die Herstellung von Ammoniak aus Wasserstoff und Stickstoff, bei dem ein Hochdruckelektrolyseur verwendet wird, um Wasserstoff ohne die Verwendung von mechanischen Kompressoren mit den hohen Drücken zu erzeugen, die für das Ammoniak-Syntheseverfahren erforderlich sind. Das Nebenprodukt Hochdruck-Sauerstoff kann u.a. zur Erzeugung von elektrischem Strom verwendet werden, indem der Hochdruck-Sauerstoff dazu verwendet wird, einen Turbogenerator anzutreiben. Der so erzeugte elektrische Strom wird für das Elektrolyseverfahren verwendet.

Die US 20100025232 A1 hat eine Vorrichtung und ein damit verbundenes Verfahren zum Rückgewinnen von Kompressionsenergie zum Gegenstand, die in Wasserstoffgas und Sauerstoff gespeichert ist, die durch Elektrolyse von Wasser in einem Hochdruck-Wasser-Elektrolyseur erzeugt werden. Der Sauerstoff und/oder der Wasserstoff werden durch eine jeweilige Gasexpansionsmaschine expandiert, die mit einem Generator verbunden ist. Der so erzeugte elektrische Strom kann entweder dem Hochdruck-Wasser-Elektrolyseur zur Verfügung gestellt werden oder einem damit verbundenen System, das Hochdruck-Wasserstoffgas oder Hochdruck-Sauerstoffgas verwendet, wie etwa eine Brennstoffzelle eines Elektrofahrzeugs.

Und aus der US 2006/0065214 A1 ist ein Wasserstoff-Kraftstoff-System für eine Verbrennungskraftmaschine bekannt, umfassend einen Elektrolyseur zum Erzeugen von Wasserstoff- und Sauerstoffgas, wobei der Elektrolyseur bei einem Druck von etwa 25 bar betrieben wird. Der Druck des aus dem Elektrolyseur austretenden Wasserstoff- und Sauerstoffgases wird mittels je einer Expansionsvorrichtung erniedrigt und der dabei erzeugte elektrische Strom für das Elektrolyseverfahren verwendet.

Der Erfindung liegt die Aufgabe zugrunde, ein im Vergleich zum Stand der Technik verbessertes Verfahren zum Betreiben einer Elektrolyseanlage sowie eine verbesserte Elektrolyseanlage bereitzustellen.

Die Aufgabe wird erfindungsgemäß gelöst durch ein Verfahren zum Betreiben einer Elektrolyseanlage, insbesondere einer Hochdruckelektrolyseanlage, umfassend einen Elektrolyseur, insbesondere einen PEM-Elektrolyseur, zur Erzeugung von Wasserstoff und Sauerstoff als Produktgase, wobei der im Elektrolyseprozess erzeugte Wasserstoff und Sauerstoff aus dem Elektrolyseur abgeführt wird, wobei mindestens eines der Produktgase in einer Entspannungsturbine entspannt wird, und wobei ein Generator von der Entspannungsturbine angetrieben wird. Das Verfahren ist dadurch gekennzeichnet, dass die Entspannungsturbine (10) zur Druckniveauregelung des Elektrolyseurs (4) eingesetzt wird.

Die Aufgabe wird zudem erfindungsgemäß gelöst durch eine Elektrolyseanlage, insbesondere einer Hochdruckelektrolyseanlage, umfassend einen Elektrolyseur, insbesondere einen PEM-Elektrolyseur, zur Erzeugung von Wasserstoff und Sauerstoff als Produktgase, umfassend weiterhin eine Wasserstoffleitung zum Abführen des im Elektrolyseprozess erzeugten Wasserstoffs sowie eine Sauerstoffleitung zum Abführen des im Elektrolyseprozess erzeugten Sauerstoffs, wobei mindestens eine Entspannungsturbine zur Entspannung zumindest eines der Produktgase vorgesehen ist, wobei der Entspannungsturbine ein Generator zum Erzeugen von elektrischem Strom nachgeschaltet ist. Die Elektrolyseanlage ist dadurch gekennzeichnet, dass die Entspannungsturbine zur Druckniveauregelung des Elektrolyseurs vorgesehen ist.

Die in Bezug auf das Verfahren nachstehend angeführten Vorteile und bevorzugten Ausgestaltungen lassen sich sinngemäß auf die Elektrolyseanlage übertragen.

Die Erfindung geht aus von der an sich bereits bekannten Idee, die Druckenergie mindestens eines der Produktgase Sauerstoff bzw. Wasserstoff zu nutzen, um elektrischen Strom zu generieren. Eine Turbine hat dabei den wesentlichen Vorteil, dass sie sehr schnell auf Laständerungen reagieren kann. Wenn sich also der Gasvolumenstrom ändert, kann die Leistung der Turbine sofort angepasst werden.

Die Entspannungsturbine wird erfindungsgemäß zudem zur Druckniveauregelung des Elektrolyseurs eingesetzt. Derzeit kommen zur Druckniveauregelung z.B. Entspannungsventile zum Einsatz. Durch eine Druckniveauregelung mittels der Entspannungsturbine, die sehr schnelle und flexible Druckänderungen ermöglicht, entfällt somit das Entspannungsventil.

Gemäß einer bevorzugten Ausführungsform wird der durch den Generator erzeugte elektrische Strom über eine elektrische Leitung in den Elektrolyseur eingespeist. Dies hat den Vorteil, dass der auf eine Welle mit der Turbine angeordnete Generator keinerlei Bedingungen zur Stromqualität erfüllen muss (Frequenz, Rauschen, etc.). Hierdurch lässt sich der elektrische Wirkungsgrad eines PEM-Elektrolyseurs um ca. 4% verbessern.

Um die Effizienz der Elektrolyseanlage zu erhöhen, wird bevorzugt sowohl der Wasserstoff als auch der Sauerstoff entspannt, wobei zum Entspannen des Wasserstoffs und des Sauerstoffs je eine Entspannungsturbine vorgesehen ist, die entsprechend an der Wasserstoffleitung und der Sauerstoffleitung angeordnet sind. Dies gilt insbesondere für Großanlagen oder Wasserstofftankstellen.

Im Hinblick auf eine Verbesserung des Anlagenwirkungsgrades durch thermische Integration einer Kühlleistung wird bevorzugt das bei der Entspannung in der Entspannungsturbine gekühlte Produktgas als Kältestrom verwendet, z.B. indem es in den Elektrolyseur zurückgeführt wird oder eine Wärmeübertragung zum Kühlen des anderen Produktgases stattfindet. Alternativ oder ergänzend zur internen Nutzung der Kälte aus der Kühlung des Produktgases durch die Entspannung ist auch eine externe Nutzung der Kälte außerhalb der Elektrolyseanlage denkbar.

Vorzugsweise wird der Sauerstoff entspannt und als Kaltsauerstoff zum Vorkühlen des Wasserstoffs eingesetzt. Dies wird anlagenbautechnisch realisiert, indem die Entspannungsturbine an der Sauerstoffleitung angeordnet ist und nach der Entspannungsturbine eine Kaltsauerstoff-Leitung vorgesehen ist, die strömungstechnisch mit der Wasserstoffleitung verbunden ist. Unter strömungstechnisch verbunden wird hierbei verstanden, dass ein Wärmeaustausch zwischen beiden Produktgasen stattfindet. Eine Stoffübertragung, beispielsweise indem beide Gasströme zusammengeführt werden, ist nicht vorgesehen. Eine Kühlung des Wasserstoffs durch den entspannten Sauerstoff ist insbesondere bei der Anwendung der Elektrolyseanlage an PKW- und/oder LKW-Wasserstoff-Tankstellen vorteilhaft, da der kalte Sauerstoff zur Vorkühlung des noch komprimierten Wasserstoffs dient, um diesen effektiv weiter zu verdichten.

Zweckdienlicherweise wird der Sauerstoff vor der Entspannungsturbine gekühlt, indem an der Sauerstoffleitung eine Kühleinrichtung angeordnet ist. Eine Vorkühlung des Drucksauerstoffs ermöglicht tiefere Temperaturen nach der Entspannung bzw. größere Kühlleistung bei nachgeschalteten Anwendungen.

Ein Ausführungsbeispiel der Erfindung wird anhand einer Zeichnung näher erläutert.

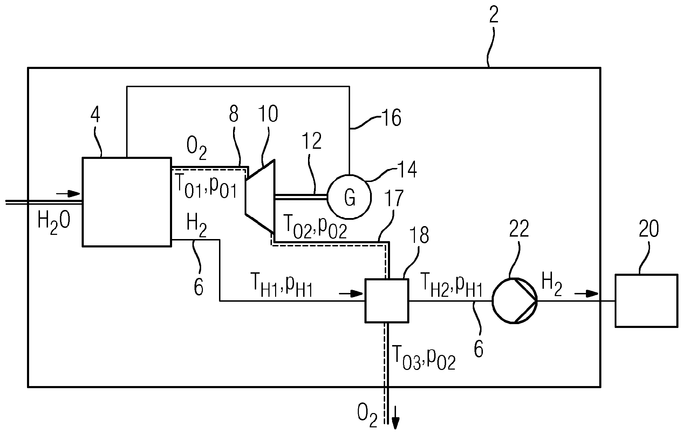

Hierin zeigt die einzige Figur den beispielhaften Aufbau einer Elektrolyseanlage 2 umfassend einen PEM-Hochdruckelektrolyseur 4 zur Erzeugung der Produktgase Wasserstoff H₂ und Sauerstoff O₂ aus Wasser H₂O. Zum Abführen der Produktgase sind eine Wasserstoffleitung 6 und eine Sauerstoffleitung 8 vorgesehen.

Im gezeigten Ausführungsbeispiel ist an der Sauerstoffleitung 8 eine Entspannungsturbine 10 angeordnet. Die Entspannungsturbine 10 ist über eine Welle 12 mit einem Generator 14 gekoppelt, mit dessen Hilfe bei der Entspannung des Produktgases Sauerstoff elektrischer Strom generiert wird. Über eine elektrische Leitung 16 wird der durch den Generator 14 erzeugte elektrische Strom in den Elektrolyseur 4 zur Durchführung des Elektrolyseprozesses eingespeist. Möglich ist jedoch auch den elektrischen Strom in ein Stromnetz für externe Anwendungen außerhalb der Elektrolyseanlage 2 einzuspeisen.

Vor der Entspannungsturbine 10 weist der Sauerstoff in der Sauerstoffleitung 8 eine erste Temperatur T_{O1} und einen ersten Druck p_{O1} auf. Nach der Entspannungsturbine 10 ist der Sauerstoff auf eine zweite Temperatur T_{O2} abgekühlt und sein Druck ist auf einen zweiten Druck p_{O2} herabgesetzt. Somit gilt T_{O1}>T_{O2} und p_{O1}>p_{O2}. Die Entspannungsturbine 10 ersetzt dabei ein Druckniveauregelungsventil und übernimmt zusätzlich die Funktion der Druckniveauregelung des PEM-Hochdruckelektrolyseurs 4.

Im gezeigten Ausführungsbeispiel ist in der Sauerstoffleitung 8 nach der Entspannungsturbine 10 ein Wärmetauscher 18 integriert. Der Kaltsauerstoff in einer Kälteleitung 17 bildet hierbei die Sekundärseite des Wärmetauschers 18. Primärseitig wird in den Wärmetauscher 18 über die Wasserstoffleitung 6 Wasserstoff aus dem PEM-Hochdruckelektrolyseur 4 eingeleitet.

Vor dem Wärmetauscher 18 weist der Wasserstoff eine erste Temperatur T_{H1} und einen ersten Druck p_{H1} auf. Durch die Wärmeabgabe im Wärmetauscher 18 sinkt die Temperatur des Wasserstoffs nach dem Wärmetauscher 18 auf eine zweite Temperatur T_{H2}. Der Druck des Wasserstoffs bleibt nach dem Wärmetauscher 18 im Wesentlichen unverändert bei p_{H1}.

Ebenso bleibt der Druck des Sauerstoffs nach dem Wärmetauscher 18 auf dem Niveau p_{O2}, die Temperatur des Sauerstoffs steigt jedoch im Wärmetauscher 18 auf T_{O3}.

Nachdem die Temperatur des Wasserstoffs in der Wasserstoffleitung 6 abgesenkt ist, wird der Wasserstoff für seine Anwendung in einer symbolisch mit dem Block 20 angedeutete Wasserstoff-Tankstelle mittels eines Verdichters 22 komprimiert.

Bei der in der Figur gezeigten Elektrolyseanlage 2 wird die Kälteleistung des entspannten Sauerstoffs verwendet, um den Wasserstoff vorzukühlen, insbesondere bevor er für seinen Einsatz in der Wasserstofftankstelle 20 komprimiert wird.

Denkbar ist auch, an der Sauerstoffleitung eine hier nicht näher gezeigte Kühleinrichtung anzuordnen, um eine tiefere Temperatur T_{O1} zu erreichen, wodurch insbesondere die Kühlleistung im Wärmetauscher 18 erhöht wird.

## Patentansprüche

1. Verfahren zum Betreiben einer Elektrolyseanlage (2), insbesondere einer Hochdruckelektrolyseanlage, umfassend einen Elektrolyseur (4) zur Erzeugung von Wasserstoff und Sauerstoff als Produktgase, wobei der im Elektrolyseprozess erzeugte Wasserstoff und Sauerstoff aus dem Elektrolyseur (4) abgeführt wird, wobei mindestens eines der Produktgase in einer Entspannungsturbine (10) entspannt wird, wobei ein Generator (14) von der Entspannungsturbine (10) angetrieben wird, **dadurch gekennzeichnet dass**,
die Entspannungsturbine (10) zur Druckniveauregelung des Elektrolyseurs (4) eingesetzt wird.

2. Verfahren nach Anspruch 1,
**dadurch gekennzeichnet, dass** ein durch den Generator (14) erzeugter elektrischer Strom in den Elektrolyseur (4) eingespeist wird.

3. Verfahren nach einem der vorhergehenden Ansprüche, **dadurch gekennzeichnet, dass** zum Entspannen des Wasserstoffs und des Sauerstoffs je eine Entspannungsturbine (10) vorgesehen ist.

4. Verfahren nach einem der vorhergehenden Ansprüche, **dadurch gekennzeichnet, dass** das bei der Entspannung in der Entspannungsturbine (10) gekühlte Produktgas als Kältestrom verwendet wird.

5. Verfahren nach einem der vorhergehenden Ansprüche, **dadurch gekennzeichnet, dass** der Sauerstoff entspannt wird und als Kaltsauerstoff zum Vorkühlen des Wasserstoffs eingesetzt wird.

6. Verfahren nach einem der vorhergehenden Ansprüche, **dadurch gekennzeichnet, dass** der Sauerstoff vor der Entspannungsturbine (10) gekühlt wird.

7. Elektrolyseanlage (2), insbesondere eine Hochdruckelektrolyseanlage, umfassend einen Elektrolyseur (4) zur Erzeugung von Wasserstoff und Sauerstoff als Produktgase, umfassend weiterhin eine Wasserstoffleitung (6) zum Abführen des im Elektrolyseprozess erzeugten Wasserstoffs sowie eine Sauerstoffleitung zum Abführen des im Elektrolyseprozess erzeugten Sauerstoffs, wobei mindestens eine Entspannungsturbine (10) zur Entspannung zumindest eines der Produktgase vorgesehen ist, und wobei der Entspannungsturbine (10) ein Generator (14) zum Erzeugen von elektrischem Strom nachgeschaltet ist, **dadurch gekennzeichnet, dass**
die Entspannungsturbine (10) zur Druckniveauregelung des Elektrolyseurs (4) vorgesehen ist.

8. Elektrolyseanlage (2) nach Anspruch 7,
**dadurch gekennzeichnet, dass** eine elektrische Leitung (16) zum Einspeisen des im Generator (14) erzeugten elektrischen Stroms in den Elektrolyseur (4) vorgesehen ist.

9. Elektrolyseanlage (2) nach einem der Ansprüche 7 oder 8, **dadurch gekennzeichnet, dass** an der Wasserstoffleitung (6) und an der Sauerstoffleitung (8) je eine Entspannungsturbine (10) angeordnet ist.

10. Elektrolyseanlage (2) nach einem der Ansprüche 7 bis 9, **dadurch gekennzeichnet, dass** der Entspannungsturbine (10) eine Kälteleitung (17) für weitere Anwendungen des gekühlten Produktgases nachgeordnet ist.

11. Elektrolyseanlage (2) nach einem der Ansprüche 7 bis 8, **dadurch gekennzeichnet, dass** die Entspannungsturbine (10) an der Sauerstoffleitung (8) angeordnet ist und nach der Entspannungsturbine (10) ist eine Kaltsauerstoff-Leitung (17) vorgesehen, die strömungstechnisch mit der Wasserstoffleitung (6) verbunden ist.

12. Elektrolyseanlage (2) nach einem der Ansprüche 7 bis 11, **dadurch gekennzeichnet, dass** an der Sauerstoffleitung (8) eine Kühleinrichtung angeordnet ist.

## Claims

1. Method for operating an electrolytic system (2), in particular a high pressure electrolytic system, comprising an electrolyzer (4) for producing hydrogen and oxygen as product gases, wherein the hydrogen and oxygen produced in the electrolysis process are discharged from the electrolyzer (4), wherein at least one of the product gases is decompressed in a decompression turbine (10), wherein a generator (14) is driven by the decompression turbine (10), **characterized in that** the decompression turbine (10) is used to regulate the pressure level in the electrolyzer (4).

2. Method according to Claim 1,
**characterized in that** the electric current produced by the generator (14) is supplied to the electrolyzer (4).

3. Method according to one of the preceding claims, **characterized in that** a respective decompression turbine (10) is provided to decompress the hydrogen and the oxygen.

4. Method according to one of the preceding claims, **characterized in that** cooled product gas is used as the cold stream for the decompression in the decompression turbine (10).

5. Method according to one of the preceding claims, **characterized in that** the oxygen is decompressed and used as cold oxygen to precool the hydrogen.

6. Method according to one of the preceding claims, **characterized in that** the oxygen is cooled upstream of the decompression turbine (10).

7. Electrolytic system (2), in particular a high pressure electrolytic system, comprising an electrolyzer (4) for producing hydrogen and oxygen as product gases, further comprising a hydrogen line (6) for discharging the hydrogen produced in the electrolysis process, as well as an oxygen line for discharging the oxygen produced in the electrolysis process, wherein at least one decompression turbine (10) is provided to decompress at least one of the product gases, wherein a generator (14) is connected downstream of the decompression turbine (10) in order to produce electric current, **characterized in that** the decompression turbine (10) is provided in order to regulate the pressure level of the electrolyzer (4).

8. Electrolytic system (2) according to Claim 7, **characterized in that** an electric line (16) is provided to supply the electric current generated in the generator (14) to the electrolyzer (4).

9. Electrolytic system (2) according to one of Claims 7 or 8, **characterized in that** a respective decompression turbine (10) is provided in each of the hydrogen line (6) and the oxygen line (8).

10. Electrolytic system (2) according to one of Claims 7 to 9, **characterized in that** a cold line (17) is provided downstream of the decompression turbine (10) for further applications of the cooled product gas.

11. Electrolytic system (2) according to one of Claims 7 or 8, **characterized in that** the decompression turbine (10) is disposed on the oxygen line (8) and a cold oxygen line (17) is provided downstream of the decompression turbine (10), which is fluidically connected with the hydrogen line (6).

12. Electrolytic system (2) according to one of Claims 7 to 11, **characterized in that** cooling equipment is disposed on the oxygen line (8).

## Revendications

1. Procédé pour faire fonctionner une installation (2) d'électrolyse, notamment une installation d'électrolyse sous haute pression, comprenant un électrolyseur (4) de production d'hydrogène et d'oxygène comme gaz produits, dans lequel on évacue de l'électrolyseur (4) de l'hydrogène et de l'oxygène produits dans l'opération d'électrolyse, dans lequel on détend au moins l'un des gaz produits dans une turbine (10) de détente, dans lequel on entraîne une génératrice (14) par la turbine (10) de détente, **caractérisé en ce que** l'on utilise la turbine (10) de détente pour réguler le niveau de pression de l'électrolyseur (4).

2. Procédé suivant la revendication 1,
**caractérisé en ce que** l'on injecte dans l'électrolyseur (4) un courant électrique produit par la génératrice (14).

3. Procédé suivant l'une des revendications précédentes, **caractérisé en ce que**, respectivement, une turbine (10) de détente est prévue pour la détente de l'hydrogène et de l'oxygène.

4. Procédé suivant l'une des revendications précédentes, **caractérisé en ce que** l'on utilise comme courant frigorifique du gaz produit refroidi lors de la détente dans la turbine (10) de détente.

5. Procédé suivant l'une des revendications précédentes, **caractérisé en ce que** l'on détend l'oxygène et on l'utilise comme oxygène frigorifique pour prérefroidir l'hydrogène.

6. Procédé suivant l'une des revendications précédentes, **caractérisé en ce que** l'on refroidit l'oxygène avant la turbine (10) de détente.

7. Installation (2) d'électrolyse, notamment installation d'électrolyse sous haute pression, comprenant un électrolyseur (4) de production d'hydrogène et d'oxygène comme gaz produits, comprenant, en outre, un produit (6) pour de l'hydrogène pour évacuer l'hydrogène produit dans l'opération d'électrolyse, ainsi qu'un conduit pour de l'oxygène pour évacuer l'oxygène produit dans l'opération d'électrolyse, dans laquelle il est prévu au moins une turbine (10) de détente pour détendre au moins l'un des gaz produits et dans laquelle une génératrice (14) de production de courant électrique est montée en aval de la turbine (10) de détente,
**caractérisée en ce que**
la turbine (10) de détente est prévue pour réguler le niveau de pression de l'électrolyseur (4).

8. Installation (2) d'électrolyse suivant la revendication 7,
**caractérisée en ce qu'**il est prévu une ligne (16) électrique pour injecter dans l'électrolyseur (4) le courant électrique produit dans la génératrice (14).

9. Installation (2) d'électrolyse suivant l'une des revendications 7 ou 8,
**caractérisée en ce que**, respectivement, une turbine (10) de détente est montée sur le conduit (6) pour de l'hydrogène et sur le conduit (8) pour de l'oxygène.

10. Installation (2) d'électrolyse suivant l'une des revendications 7 à 9,
**caractérisée en ce qu'**un conduit (17) réfrigérant, pour des applications autres du gaz produit refroidi, est monté en aval de la turbine (10) de détente.

11. Installation (2) d'électrolyse suivant l'une des revendications 7 à 8,
**caractérisée en ce que** la turbine (10) de détente est montée sur le conduit (8) pour de l'oxygène et, après la turbine (10) de détente, est prévu un conduit (17) pour de l'oxygène froid, qui communique en technique des fluides avec le conduit pour de l'hydrogène.

12. Installation (2) d'électrolyse suivant l'une des revendications 7 à 11,
**caractérisée en ce qu'**un dispositif de refroidissement est monté sur le conduit (8) pour de l'oxygène.
